# EUROPÄISCHE PATENTSCHRIFT

(11) **EP 1 761 355 B1**
(45) Veröffentlichungstag und Bekanntmachung des Hinweises auf die Patenterteilung: **15.10.2008**
(21) Anmeldenummer: 05746635.1
(22) Anmeldetag: 30.05.2005
(51) Int. Cl.: B23B 31/02, B23B 31/20, B23P 11/02, B23Q 3/08

(54) **WERKZEUGHALTER MIT DURCHMESSERAUSGLEICHSBUCHSE**
TOOL HOLDER WITH DIAMETER COMPENSATION BUSHING
SUPPORT D'OUTIL AVEC DOUILLE DE COMPENSATION DE DIAMETRE

(30) Priorität: 01.06.2004 DE 102004026635
(43) Veröffentlichungstag der Anmeldung: 14.03.2007
(73) Patentinhaber: Franz Haimer Maschinenbau KG, 86568 Hollenbach-Igenhausen (DE)
(72) Erfinder: HAIMER, Franz, 86568 Hollenbach-Igenhausen (DE); HAIMER, Josef, 86568 Igenhausen (DE)
(74) Vertreter: Liska, Horst
(86) Internationale Anmeldenummer: PCT/EP2005/005804
(87) Internationale Veröffentlichungsnummer: WO 2005/118189

(56) Entgegenhaltungen:
- WO-A-01/19558
- GB-A- 696 485
- US-A- 4 021 051
- US-A- 5 030 047
- US-B1- 6 371 705
- PATENT ABSTRACTS OF JAPAN Bd. 2003, Nr. 02, 5. Februar 2003 (2003-02-05) -& JP 2002 283162 A (MST CORPORATION), 3. Oktober 2002 (2002-10-03)

## Beschreibung

Die Erfindung betrifft einen Werkzeughalter, insbesondere vom Schrumpffuttertyp, mit einer Durchmesserausgleichsbuchse

In der Praxis werden zum Spannen von rotierenden Werkzeugen, wie zum Beispiel Bohrern oder Fräsern oder dergleichen vielfach Werkzeughalter benutzt, deren den Schaft des Rotationswerkzeugs im radialen Presssitz haltende Spannmittel einen nur geringen maximalen Hub haben. Es gilt die Regel, dass die Präzision und Rundlaufgenauigkeit des Werkzeughalters umso größer ist, je kleiner der Spannhub ist. So haben Präzisions-Zangenspannfutter einen Spannhub von nur einigen wenigen Millimetern, während sonstige Präzisions-Spannfutter, wie zum Beispiel Hydro-Dehnspannfutter oder mechanische Spannfutter mit ringförmig geschlossenen Spannmitteln, insbesondere aber Werkzeughalter vom Schrumpffuttertyp so ausgebildet sind, dass Rotationswerkzeuge mit lediglich einem einzigen Schaft-Nenndurchmesser in dem Werkzeughalter direkt gespannt werden können. Die Folge ist, dass eine Vielzahl Werkzeughalter für unterschiedliche Schaft-durchmesser bereitgehalten werden muss oder aber Rotationswerkzeuge mit speziell gestalteten Werkzeugschäften benutzt werden müssen. Hierbei ist es auch bekannt, ein Zangenspannfutter in einen Werkzeughalter vom Schrumpffuttertyp einzuschrumpfen (US 4 021 051).

Ein Werkzeughalter nach dem Oberbegriff von Anspruch 1 ist in Dokument US 6371705 beschrieben.

Werkzeughalter vom Schrumpffuttertyp halten den Schaft des Rotationswerkzeugs, beispielsweise eines Bohrers oder Fräsers oder dergleichen normalerweise im direkten Presssitz in einer zentrischen Aufnahmeöffnung eines koaxial zur Drehachse von dem Werkzeughalter abstehenden, hülsenförmigen Aufnahmeabschnitts. Durch Erwärmen beispielsweise mittels eines induktiven Schrumpfgeräts, wie es beispielsweise aus WO 01/89758 A1 bekannt ist, kann der Aufnahmeabschnitt aufgeweitet werden, so dass der Schaft des Rotationswerkzeugs in die Aufnahmeöffnung eingesteckt oder aus dieser herausgenommen werden kann. Nach dem Abkühlen schrumpft der Aufnahmeabschnitt und übt radiale Presssitzkräfte direkt auf den Schaft. des Rotationswerkzeugs aus.

Um einen solchen Presssitz zu erreichen, ist der Außendurchmesser des Schafts des Rotationswerkzeugs etwas größer als der Innendurchmesser der Aufnahmeöffnung. Um einerseits hinreichend große Presssitzkräfte übertragen zu können, andererseits aber für das Herausnehmen des Schafts aus dem Aufnahmeabschnitt beim Erwärmen eine hinreichend große Aufweitung zu erreichen, muss der Außendurchmesser des Schafts innerhalb enger Toleranzgrenzen an den Innendurchmesser der Aufnahmeöffnung angepasst sein. Üblicherweise bedarf dies einer sehr genauen Bearbeitung des Werkzeugschafts, so dass Rotationswerkzeuge vielfach für den Einsatz bei einem Werkzeughalter vom Schrumpffuttertyp vorbereitet werden müssen.

Bei einer Vielzahl Anwendungsfälle besteht der Wunsch herkömmliche Rotationswerkzeuge, wie zum Beispiel Gewindebohrer oder Spiralbohrer auch bei Werkzeughaltern mit geringem Spannhub einsetzen zu können. Dies ist mit herkömmlichen Werkzeughaltern der vorstehend erläuterten Art, insbesondere Werkzeughaltern vom Schrumpffuttertyp nicht möglich, weil solche Standard-Rotationswerkzeuge meistens einen Schaftdurchmesser haben, der nicht dem Nenndurchmesser der vorhandenen Werkzeughalter entspricht oder dessen Toleranzen nicht den Spannhubtoleranzen genügen. Der Innendurchmesser der Aufnahmeöffnung von Werkzeughaltern mit geringem Spannhub wie zum Beispiel von Werkzeughaltern vom Schrumpffuttertyp ist zumeist nur in relativ großen Durchmessersprüngen wie zum Beispiel 1 mm-Schritten bei kleineren Durchmessern oder 5 mm-Schritten bei größeren Durchmessern gestuft. Standard-Rotationswerkzeuge, wie zum Beispiel Spiralbohrer hingegen haben Schaftdurchmesser, die entsprechend dem Bohrerdurchmesser in 1/10-mm-Schritten gestuft sind. Solche Standard-Bohrer lassen sich bei herkömmlichen Werkzeughaltern nicht einsetzen, wenn nicht eine Vielzahl unterschiedlicher Werkzeughalter bereitgehalten wird.

Es ist auf Aufgabe der Erfindung einen Weg zu zeigen, wie der Schaft eines Rotationswerkzeugs auch dann betriebssicher in radialem Presssitz in einem Werkzeughalter gespannt werden kann, wenn der Nenndurchmesser oder die Durchmessertoleranz des Schafts nicht für das Spannen in diesem Werkzeughalter bestimmt ist.
Der erfindungsgemäße Werkzeughalter ist durch die Merkmale von Anspruch 1 gekennzeichnet.
Die Erfindung geht hierbei von einem Werkzeughalter aus, dessen Aufnahmeabschnitt für die Halterung eines Schafts eines Rotationswerkzeugs zentrisch zu einer Drehachse des Werkzeughalters vorgesehene Spannmittel umfasst, die eine Aufnahmeöffnung für den Schaft definieren, wobei die Spannmittel zwischen einer radial aufgeweiteten Lösestellung zum Einsetzen oder Entnehmen des Schafts und einer Spannstellung, in der die Spannmittel radiale Presssitzkräfte auf den Schaft ausüben, radial verstellbar sind.
Für einen solchen Werkzeughalter wird erfindungsgemäß eine Differenzausgleichsbuchse vorgeschlagen, die zwei koaxial ineinander angeordnete Hülsen umfasst, von denen die äußere Hülse eine zylindrische Aussenfläche und eine konische Innenfläche hat und von denen die innere Hülse eine an der konischen Innenfläche der äußeren Hülse anliegende konische Außenfläche und eine zylindrische Innenfläche hat, deren Innendurchmesser für den Durchmesserausgleich durch axiales Verschieben der inneren Hülse und der äußeren Hülse relativ zueinander bis zur Anlage der Innenfläche der inneren Hülse an der Außenfläche des Schafts änderbar ist. Der Außendurchmesser der äußeren Hülse ist hierbei kleiner als der Innendurchmesser der Aufnahmeöffnung in der Lösestellung der Spannmittel und die Durchmesserausgleichsbuchse ist in der Lösestellung der Spannmittel in die Aufnahmeöffnung einsetzbar oder aus ihr herausnehmbar und überträgt in der Spannstellung der Spannmittel die radialen Presssitzkräfte auf den Schaft.

Die Erfindung geht von der Idee aus, das Rotationswerkzeug nicht in einem Werkzeughalter mit dem Nenndurchmesser des Werkzeugschafts angepassten Innendurchmesser seiner Aufnahmeöffnung zu spannen, sondern hierfür einen Werkzeughalter mit größerem Innendurchmesser zu nutzen und den Innendurchmesser mittels der Durchmesserausgleichsbuchse variabel an den Nenndurchmesser des Werkzeugschafts anzupassen. Mit Hilfe einer Durchmesserausgleichsbuchse gemäß der Erfindung können Durchmesserunterschiede zwischen dem Nenndurchmesser des Werkzeugschafts und dem Innendurchmesser des Werkzeughalters bis zu einigen Millimetern einschließlich eventuell vorhandener Durchmessertoleranzen stufenlos ausgeglichen werden. Auf diese Weise können beispielsweise in 1/10 mm-Durchmessersprüngen gestufte Spiralbohrer bei Werkzeughaltern eingesetzt werden, deren Aufnahmeöffnungen in 1 mm-Schritten gestuft sind.

Da durch axiales Verschieben der inneren Hülse und der äußeren Hülse relativ zueinander bereits vor dem Einspannen des Werkzeugschafts in den Werkzeughalter radiales Spiel zwischen der Durchmesserausgleichsbuchse und dem Werkzeugschaft ausgeglichen wird, wird sichergestellt, dass die Durchmesserausgleichsbuchse die von den Spannmitteln des Aufnahmeabschnitts ausgeübten Presssitzkräfte auf den Werkzeugschaft auch bei kleinem maximalen Spannhub der Spannmittel überträgt. Die Durchmesserausgleichsbuchse wird hierbei elastisch radial eingeengt. Da die eigentlichen Presssitzkräfte vom Aufnahmeabschnitt ausgeübt werden, muss die Differenzausgleichsbuchse für sich genommen nicht nach Art einer Spannzange drehmomentübertragend radial gespannt werden. Es genügt, wenn die innere und die äußere Hülse soweit axial relativ zueinander verschoben werden, dass eventuelles Spiel zwischen der inneren Hülse und dem Werkzeugschaft ausgeglichen ist. Die Wandstärken der inneren Hülse und der äußeren Hülse können deshalb vergleichsweise gering bemessen sein, was die Übertragung der Presssitzkräfte von dem Aufnahmeabschnitt auf den Werkzeugschaft erleichtert.

In einer bevorzugten Ausgestaltung hat die innere Hülse wenigstens eine, vorzugsweise jedoch in Umfangsrichtung verteilt mehrere axial sich erstreckende Ausgleichsfugen. Die Ausgleichsfugen erleichtert die Durchmesseränderung der inneren Hülse für den Durchmesserausgleich. Insbesondere wenn mehrere, in Umfangsrichtung verteilt angeordnete Ausgleichsfugen, beispielsweise vier oder sechs in Umfangsrichtung in gleichen Abständen angeordnete Ausgleichsfugen vorgesehen sind, wird auch die Übertragung der Presssitzkräfte verbessert, da sich die innere Hülse gleichmäßiger an den Umfang des Werkzeugschafts anschmiegt.

Zumindest eine Teilanzahl der Ausgleichsfugen kann als axial sich erstreckende Nuten ausgebildet sein. Die Böden der Nuten sorgen für eine geschlossene Mantelfläche der Hülsenwand und erschweren das Verdrillen der inneren Hülse, was der Präzision des Spannvorgangs zugute kommt. Die Nuten sind bevorzugt in der Außenfläche der inneren Hülse vorgesehen, so dass der Innenumfang der Hülse ungeschwächt für die Übertragung der Presssitzkräfte zur Verfügung steht.

Bei den Ausgleichsfugen kann es sich jedoch auch um Schlitze handeln, die die innere Hülse radial durchdringen. Schlitze haben den Vorteil, dass sie besonders gut Durchmesseränderungen der inneren Hülse aufnehmen können. Es hat sich als zweckmäßig erwiesen, wenn wenigstens eine der Ausgleichsfugen als Schlitz ausgebildet ist, während die übrigen Ausgleichsfugen der inneren Hülse als Nuten ausgebildet sind, wie sie vorstehend erläutert wurden. Eine solche Hülse schmiegt sich besonders gut an den Außenumfang des Werkzeugschafts an.

Um die Verwindungsstabilität der inneren Hülse und damit die Spannpräzision der Toleranzausgleichsbuchse insgesamt zu erhöhen ist bevorzugt vorgesehen, dass die axiale Länge der Ausgleichsfugen kleiner ist als die axiale Länge der inneren Hülse und die Ausgleichsfugen in Umfangsrichtung abwechselnd von einem und vom anderen der axialen Enden der inneren Hülse ausgehen.

Der Konuswinkel der beiden Hülsen ist zweckmäßigerweise so gewählt, dass die beiden Hülsen in axialer Richtung selbsthemmend miteinander verbindbar sind. Geeignet sind beispielsweise Konuswinkel von 1° bis 5°.

Bei selbsthemmender Gestaltung der Konusflächen der Hülsen, genügt es für den Durchmesserausgleich, wenn die beiden Hülsen mit relativ geringer Kraft axial ineinandergetrieben werden. In einer bevorzugten Ausgestaltung hat jedoch die innere Hülse ein Außengewinde, mit dem sie in ein Innengewinde der äußeren Hülse schraubbar ist. Eine solche Verschraubung erleichtert das Spannen und Lösen der Durchmesserausgleichsbuchse. Alternativ kann auf das Außengewinde der inneren Hülse auch eine Mutter oder dergleichen schraubbar sein, die sich an der äußeren Hülse abstützt. Eine solche Ausgestaltung hat den Vorteil, dass sich die innere Hülse beim Verschrauben nicht gegenüber dem Werkzeugschaft drehen muss.

Bevorzugt hat die äußere Hülse an einem ihrer axialen Enden einen radial nach außen abstehenden Anschlag für die Begrenzung der Einstecktiefe relativ zum Aufnahmeabschnitt des Werkzeughalters. Ein solcher Anschlag, bei welchem es sich um einen radial nach außen abstehenden Ringflansch oder dergleichen handeln kann, fixiert die Durchmesserausgleichsbuchse in einer vorbestimmten axialen Position relativ zum Aufnahmeabschnitt, was sich günstig auf das Ausspannverhalten des Werkzeughalters auswirkt.

Die äußere Hülse kann eine geschlossene Umfangswand haben was die Verwindungssteifigkeit der äußeren Hülse fördert, aber die auf die innere Hülse und damit auf den Werkzeugschaft übertragbaren radialen Presssitzkräfte mindert. Um zu verhindern, dass ein Teil der von den Spannmitteln aufgebrachten Spannkräfte für die Verformung der äußeren Hülse verbraucht wird, ist in einer bevorzugten Ausgestaltung vorgesehen, dass die äußere Hülse wenigstens eine axial sich erstreckende Ausgleichsfuge, vorzugsweise jedoch in Umfangsrichtung verteilt mehrere solcher Ausgleichsfugen aufweist. Bei den Ausgleichsfugen kann es sich wiederum um axial sich erstreckende Nuten oder die äußere Hülse radial durchdringende Schlitze handeln. Die Ausgleichsfugen enden zweckmäßigerweise mit axialem Abstand von zumindest einem axialen Ende der äußeren Hülse und vorzugsweise in axialem Abstand von beiden axialen Enden, um zu verhindern, dass sich die äußere Hülse beim Verspannen der inneren Hülse zu stark erweitert und nicht mehr in die Aufnahmeöffnung des Werkzeughalters passt. Auch hat es sich als zweckmäßig erwiesen, wenn im Bereich zumindest eines der beiden axialen Enden vorzugsweise aber beiden axialen Enden der äußeren Hülse der Außendurchmesser der äußeren Hülse axial zwischen dem axialen Ende der Hülse und dem dazu axial benachbarten Ende der Ausgleichsfugen kleiner ist als im Bereich der Ausgleichsfugen. Die äußere Hülse überträgt damit die Spannkraft der Spannmittel ausschließlich in ihrem mit Aufgleichsfugen versehenen Bereich und damit im Wesentlichen ohne Verlust an Spannkraft.

Unter einem weiteren Aspekt betrifft die Erfindung auch eine Werkzeughalteranordnung bestehend aus einem Werkzeughalter insbesondere vom Schrumpffuttertyp und einer Durchmesserausgleichsbuchse der vorstehend erläuterten Art.

Im Folgenden werden Ausführungsbeispiele der Erfindung anhand einer Zeichnung näher erläutert. Hierbei zeigt:
Fig. 1 einen Axiallängsschnitt durch einen Werkzeughalter vom Schrumpffuttertyp mit einer den Schaft eines Rotationswerkzeugs haltenden Durchmesserausgleichsbuchse gemäß der Erfindung;
Fig. 2 einen Axiallängsschnitt durch eine erste Variante der Durchmesserausgleichsbuchse;
Fig. 3 einen Axiallängsschnitt durch eine zweite Variante der Durchmesserausgleichsbuchse;
Fig. 4 einen Axialquerschnitt durch eine bevorzugte Modifikation der Durchmesserausgleichsbuchsen der Fig. 1 bis 3 und
Fig. 5 einen Axiallängsschnitt durch eine dritte Variante der Durchmesserausgleichsbuchse.

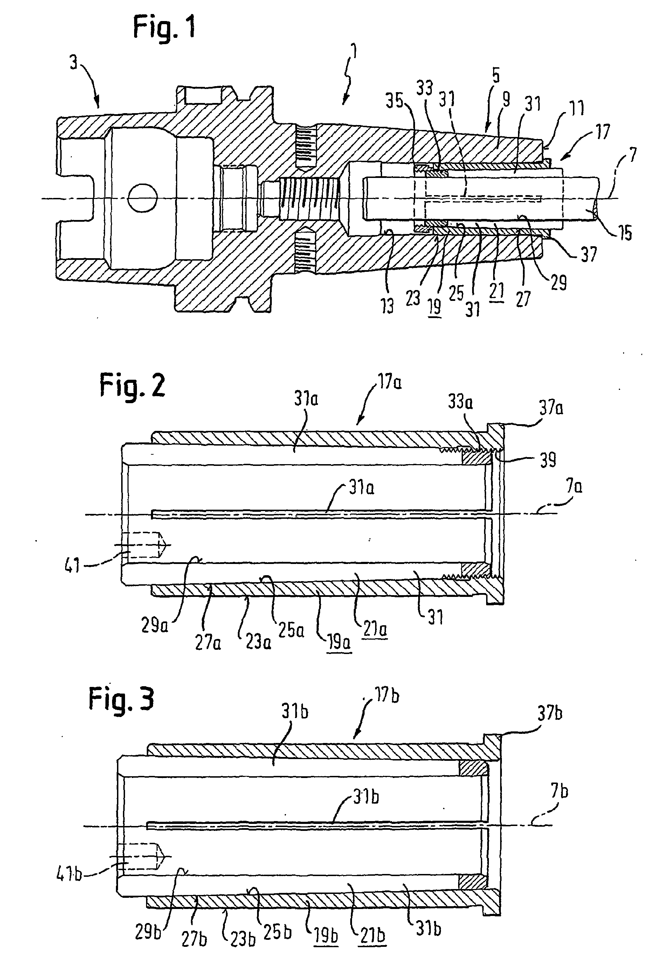

Fig. 1 zeigt einen Werkzeughalter 1 vom Schrumpffuttertyp mit einem Kupplungsabschnitt 3, hier in Form eines Hohlschaftkegels (HSK) für die drehfeste Kupplung mit einer Arbeitsspindel einer Werkzeugmaschine an seinem axial einen Ende und einem Aufnahmeabschnitt 5 an seinem axial anderen Ende. Die Drehachse des Werkzeughalters 1 ist bei 7 dargestellt. Der Kupplungsabschnitt 3 kann beliebige Gestalt haben, also auch die Form eines Steil kegels oder dergleichen. Der Aufnahmeabschnitt 5 hat die prinzipielle Form einer Hülse 9, die in einer senkrecht zur Drehachse 7 verlaufende Stirnfläche 11 endet und eine zylindrische, zur Drehachse 7 zentrische Aufnahmeöffnung 13 enthält, in die ein nicht näher dargestelltes Rotationswerkzeug mit seinem Werkzeugschaft 15 in nachfolgend noch näher erläuterter Weise auswechselbar eingreift. Der Werkzeugschaft 15 sitzt hierbei in einer allgemein mit 17 bezeichneten Durchmesserausgleichsbuchse, die ihrerseits in nachfolgend noch näher erläuterter Weise herausnehmbar in der Aufnahmeöffnung 13 angeordnet ist und von dem Aufnahmeabschnitt 9 erzeugte Presssitzkräfte radial auf den Werkzeugschaft 15 überträgt.

Die Durchmesserausgleichsbuchse 17 hat zwei koaxial ineinander angeordnete Hülsen 19, 21, von denen die äußere Hülse 19 eine zylindrische Außenfläche 23 und eine konische Innenfläche 25 hat. Die innere Hülse 21 hat eine zur Anlage an der konischen Innenfläche 25 der äußeren Hülse 19 bestimmte konische Außenfläche 27 und eine zylindrische Innenfläche 29, deren Innendurchmesser durch axiales Verschieben der inneren Hülse 21 relativ zur äußeren Hülse 19 entlang der Konusflächen 25, 27 änderbar ist. Um den Innendurchmesser der inneren Hülse 21 mit möglichst geringem axialen Kraftaufwand ändern zu können, hat die innere Hülse 21 über ihren Umfang verteilt mehrere in gleichen Winkelabständen voneinander angeordnete, axiale Ausgleichsfugen in Form axialer, die Wand der Hülse 21 durchdringender Schlitze 31, die in axialer Richtung kürzer sind als die axiale Länge der inneren Hülse 21. Die Schlitze gehen in Umfangsrichtung abwechselnd von sich axial gegenüberliegenden Enden der inneren Hülse 21 aus. Die Hülse 21 hat dementsprechend eine angenähert meanderförmige Wandstruktur. Im dargestellten Ausführungsbeispiel hat die innere Hülse 21 vier Schlitze 31, die in Umfangsrichtung mit gleichem Winkelabstand aufeinanderfolgen. Es können jedoch auch mehr oder weniger Schlitze vorhanden sein. Im Prinzip genügt es, wenn die innere Hülse 21 einen einzigen Schlitz hat, der jedoch dann die Hülse 21 axial vollständig durchquert.

Die innere Hülse 21 steht an ihrem im Durchmesser kleineren Ende über die äußere Hülse 19 axial vor und hat an diesem Ende ein Außengewinde 33, auf das eine Ringmutter 35 aufgeschraubt ist. Die Ringmutter 35 stützt sich am benachbarten Ende der äußeren Hülse 19 ab und erlaubt das Einziehen der inneren Hülse 21 in die äußere Hülse 19 unter Durchmesserverringerung der inneren Umfangsfläche 29.

Die Durchmesserausgleichsbuchse 17 überbrückt die Durchmesserdifferenz zwischen dem Außendurchmesser des Werkzeugschafts 15 und dem Innendurchmesser der Aufnahmeöffnung 13 und erlaubt den Ausgleich von Durchmessertoleranzen des Werkzeugschafts 15 wie auch die Anpassung an in einem durch den Hub der Durchmesserausgleichsbuchse 17 vorgegebenen Durchmesserbereich unterschiedliche Außendurchmesser des Werkzeugschafts 15. Hierzu wird die Durchmesserausgleichsbuchse 17 zunächst auf den Werkzeugschaft 15 aufgeschoben und dann die Ringmutter 35 soweit angezogen, bis die innere Hülse 21 spielfrei an der Umfangsfläche des Schafts 15 anliegt, ohne jedoch in nennenswertem Umfang Presssitzkräfte auf den Werkzeugschaft auszuüben.

Der Außendurchmesser der äußeren Umfangsfläche 23 der ringförmig geschlossenen äußeren Hülse 19 ist etwas größer bemessen als der Innendurchmesser der Aufnahmeöffnung 13. Bei Erwärmung des Aufnahmeabschnitts 9 beispielsweise mittels eines induktiven Schrumpfgeräts der in WO 01/89758 A1 beschriebenen Art dehnt sich die Aufnahmeöffnung 13 soweit auf, dass die spielfrei auf dem Werkzeugschaft 15 angeordnete Durchmesserausgleichsbuchse 17 in die wärmegedehnte Aufnahmeöffnung 13 eingesteckt werden kann. Ein ringförmiger Anschlagkragen 37 am werkzeugseitigen Ende der äußeren Hülse 19 begrenzt die Einstecktiefe durch Anschlagen an der Stirnfläche 11 des Aufnahmeabschnitts 9. Nach dem Abkühlen übt der damit schrumpfende Aufnahmeabschnitt 9 radiale Presskräfte auf die äußere Hülse 19 aus, die über die innere Hülse 21 auf den Werkzeugschaft 15 übertragen und diesen insgesamt im Presssitz in dem Aufnahmeabschnitt 9 drehfest fixieren. Um den Werkzeugschaft 15 aus dem Werkzeughalter 1 wieder ausspannen zu können, wird der Aufnahmeabschnitt 9 erneut erwärmt, bis dieser die Durchmesserausgleichsbuchse 17 freigibt, so dass der Werkzeugschaft 15 zusammen mit der Durchmesserausgleichsbuchse 17 aus der Aufnahmeöffnung 13 herausgezogen werden kann. Die Toleranzen des Außendurchmessers der äußeren Hülse 19 sind so gewählt, dass dieser Vorgang im Wesentlichen klemmfrei ausgeführt werden kann.

Im Folgenden werden Varianten der in einem Werkzeughalter gemäß Fig. 1 verwendbaren Durchmesserausgleichsbuchse erläutert. Einander entsprechende oder gleich wirkende Komponenten sind mit den Bezugszahlen der Fig. 1 bezeichnet und zur Unterscheidung mit einem Buchstaben versehen. Zur Erläuterung des Aufbaus und der Wirkungsweise wird auf die vorangegangene Beschreibung Bezug genommen.

Die Durchmesserausgleichsbuchse 17a der Fig. 2 unterscheidet sich von der Durchmesserausgleichsbuchse 17 der Fig. 1 im Wesentlichen nur dadurch, dass das am Durchmesser kleineren Ende der inneren Hülse 21a vorgesehene Außengewinde 33a unmittelbar in ein Innengewinde 39 am benachbarten Ende der äußeren Hülse 19a geschraubt ist. Die innere Hülse 21a verjüngt sich hierbei zur Werkzeugseite des nicht näher dargestellten Werkzeugschafts hin, das heißt zu dem mit dem Anschlagkragen 37a versehenen Ende der äußeren Hülse 19a. Am axial gegenüberliegenden Ende ist die innere Hülse 21a mit Handhabungsflächen, hier in Form von Einstecklöchern 41 für ein zum Spannen der Durchmesserausgleichsbuchse 17a aufsteckbares Drehwerkzeug vorgesehen. Fig. 2 zeigt lediglich eines der Löcher 41. Die innere Hülse 21a ist wiederum mit Ausgleichsfugen in Form axialer Schlitze 31a versehen, die in Umfangsrichtung abwechselnd von axial sich gegenüberliegenden Enden der inneren Hülse 21a in axialer Richtung über einen Teil der axialen Länge der inneren Hülse 21a sich erstrecken.

Fig. 3 zeigt eine Durchmesserausgleichsbuchse 17b, die sich von den Varianten der Fig. 1 und 2 im Wesentlichen nur dadurch unterscheidet, dass die innere Hülse 21b allein aufgrund der Selbsthemmung zwischen ihrer konusförmigen äußeren Umfangsfläche 27b und der konusförmigen inneren Umfangsfläche 25b der äußeren Hülse 19b in der äußeren Hülse 19b fixiert ist. Der Konuswinkel der Umfangsflächen 25b und 27b liegt zwischen 1° und 5°, so dass die innere Hülse 21b durch eine auf ihr Durchmesser größeres Ende ausgeübte Axialkraft in einem Klemmsitz in der äußeren Hülse 19b axial eingedrückt werden kann. Um das Eintreiben und gegebenenfalls das nachträgliche Lockern der inneren Hülse 21b zu erleichtern können am Durchmesser größeren Ende wiederum Angriffsflächen 41b für ein Werkzeug vorgesehen sein.

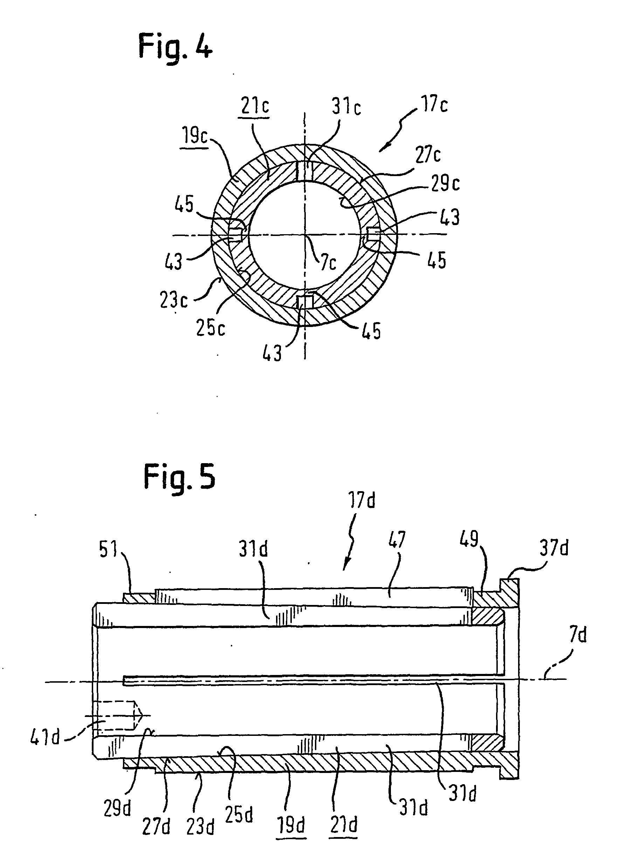

Bei den vorangegangen erläuterten Ausgestaltungen der Durchmesserausgleichsbuchse ist die innere Hülse jeweils mit radial ihre Wand durchdringenden Schlitzen (zum Beispiel 31 in Fig. 1) versehen. Fig. 4 zeigt eine Variante einer Durchmesserausgleichsbuchse, bei welcher lediglich ein einziger, axial längs der Hülse sich erstreckender und deren Wand durchdringender Schlitz 31c vorgesehen ist, während die übrigen in Umfangsrichtung der inneren Hülse 21c vorgesehenen Ausgleichsfugen als axial sich erstreckende Nuten 43 ausgebildet sind. Die Nuten 43 sind in den konischen Außenumfang 27c der inneren Hülse 21c eingearbeitet und haben durch den zylindrischen Innenumfang 29c begrenzte Böden 45. Auch hier erstrecken sich die durch den Schlitz 31c und die Nuten 43 gebildeten Ausgleichsfugen nicht über die gesamte axiale Länge der inneren Hülse 21c, sondern gehen in Umfangsrichtung abwechselnd von sich axial gegenüberliegend Enden der inneren Hülse 21c aus, wie dies im Zusammenhang zum Beispiel mit den Schlitzen 31 der Fig. 1 erläutert ist. Die Durchmesserausgleichshülse 17c ist besonders verwindungssteif und schmiegt sich bereits bei geringer Axialkrafteinwirkung an den Umfang des Werkzeugschafts an.

Es versteht sich, dass statt eines einzigen Schlitzes 31c auch mehrere Schlitze zusätzlich zu den Nuten 43 vorgesehen sein können. Die Variante der Fig. 4 kann anstelle der Schlitze der vorangegangen erläuterten Durchmesserausgleichsbuchsen der Fig. 1 bis 3 vorgesehen sein.

Bei den anhand der Fig. 1 bis 4 erläuterten Varianten der Durchmesserausgleichsbuchse ist die äußere Hülse, zum Beispiel die äußere Hülse 19 in Fig. 1, jeweils als ringförmig geschlossene, durchbrechungsfreie Hülse ausgebildet. Eine Hülse dieser Art verbraucht beim Spannen des Werkzeugs einen Teil der Spannkraft. Fig. 5 zeigt eine Variante einer Durchmesserausgleichsbuchse 17d ähnlich der Durchmesserausgleichsbuchse 17b der Fig. 3, die sich von dieser Variante im Wesentlichen nur dadurch unterscheidet, dass die äußere Hülse 19d am Umfang verteilt mehrere die Wand der Hülse 19d radial durchdringende, axial langgestreckte Schlitze 47 enthält. Fig. 5 zeigt lediglich einen dieser Schlitze 47. Um zu verhindern, dass bei dem die innere Hülse 21d verengenden Spannen der Durchmesserausgleichsbuchse 17d der Außendurchmesser der äußeren Hülse 19d zu stark aufgeweitet wird, so dass die auf den Werkzeugschaft aufgespannte Durchmesserausgleichsbuchse 17d womöglich nicht mehr in die Aufnahmeöffnung 13 des in Fig. 1 dargestellten Werkzeughalters 1 passt, enden die Schlitze 47 axial beiderseits im Abstand von den Stirnenden der äußeren Hülse 19d unter Bildung ringförmig geschlossener Endbereiche 49, 51. Der Außendurchmesser der Endbereiche 49, 51 ist etwas kleiner gewählt als der Außendurchmesser der mit den Schlitzen 47 versehenen äußeren Umfangsfläche 23d der äußeren Hülse 19d. Die auf die Durchmesserausgleichsbuchse 17d ausgeübten radialen Spannkräfte wirken auf diese Weise ausschließlich auf den mit Schlitzen 47 versehenen Mittelbereich, so dass die radialen Spannkräfte nahezu ohne Verluste auf den Werkzeugschaft übertragen werden können.

Es versteht sich, dass die Schlitze 47 gegebenenfalls an jeweils einem Ende auch bis zum Stirnende der äußeren Hülse 19d durchgehen können, wie dies für die innere Hülse vorangegangen erläutert wurde. Die Endbereiche 49 oder/und 51 können auch durchmessergleich mit dem die Schlitze 47 bildenden Mittelbereich der äußeren Hülse 19d bemessen sein.

Anstelle der Schlitze 47 können auch Nuten vorgesehen sein, wie sie in Zusammenhang mit Fig. 4 bei 43 erläutert wurden.

Die vorstehend anhand der Fig. 5 erläuterte Gestaltung der äußeren Hülse kann auch bei den vorangegangen anhand der Fig. 1 bis 4 erläuterten Varianten der Durchmesserausgleichsbuchse verwirklicht sein.

Die Durchmesserausgleichsbuchse wurde vorangegangen in Verbindung mit einem Werkzeughalter vom Schrumpffuttertyp erläutert. Es versteht sich, dass die Durchmesserausgleichsbuchse auch bei anderen Typen von Spannfuttern mit vergleichsweise geringem nutzbaren Spannhub, wie zum Beispiel Hydro-Dehnspannfuttem oder mechanischen Spannfuttern mit ringförmig geschlossenen Spannmitteln oder Präzisions-Zangenspannfuttern mit geringem Spannhub eingesetzt werden kann. Insbesondere kann die Durchmesserausgleichsbuchse bei Spannfuttern mit Vorteil eingesetzt werden, die lediglich zum Spannen von Werkzeugschäften mit einem einzigen Nenndurchmesser ausgelegt sind.

## Patentansprüche

1. Werkzeughalter für ein Rotationswerkzeug, umfassend:
• einen Aufnahmeabschnitt (9) für die Halterung eines Schafts (15) des Rotationswerkzeugs zentrisch zu einer Drehachse (7) des Werkzeughalters (1),
• eine lösbar in einer Aufnahmeöffnung (13) des Aufnahmeabschitts (9) gehaltene Durchmesserausgleichsbuchse (17) für die Überbrückung einer Durchmesserdifferenz zwischen einem Innendurchmesser der Aufnahmeöffnung (13) und einem dem Außendurchmesser des Schafts (15) entsprechend vorgebbaren Durchmesser, wobei die Durchmesserausgleichsbuchse (17) zwei koaxial ineinander angeordnete Hülsen (19, 21) umfasst, von denen die äußere Hülse (19) eine zylindrische Außenfläche (23) und eine konische Innenfläche (25) hat und von denen die innere Hülse (21) eine an der konischen Innenfläche (25) der äußeren Hülse (19) anliegende konische Außenfläche (27) und eine zylindrische Innenfläche (29) hat, deren Innendurchmesser für den Durchmesserausgleich durch axiales Verschieben der inneren Hülse (21) und der äußeren Hülse (19) relativ zueinander bis auf den das Anlegen der Innenfläche (29) der inneren Hülse (21) an die Außenfläche des Schafts (15) erlaubenden, vorgebbaren Durchmesser änderbar ist und
• an dem Aufnahmeabschitt (9) vorgesehene Spannmittel, die die Aufnahmeöffnung (13) definieren und zwischen einer radial aufgeweiteten Lösestellung zum Einsetzen oder Entnehmen der Durchmesserausgleichsbuchse (17) und einer Spannstellung, in der die Spannmittel radiale Presssitzkräfte auf die Durchmesserausgleichsbuchse (17) ausüben, radial verstellbar sind,
wobei der Außendurchmesser der äußeren Hülse (19) kleiner als der Innendurchmesser der Aufnahmeöffnung (13) in der Lösestellung der Spannmittel ist und die Durchmesserausgleichsbuchse (17) in der Lösestellung der Spannmittel in die Aufnahmeöffnung (13) einsetzbar oder aus ihr herausnehmbar ist,
**dadurch gekennzeichnet, dass** die Durchmesserausgleichsbuchse (17) die in der Spannstellung auf die äußere Hülse (19) ausgeübten radialen Presssitzkräfte für die Presssitzhalterung des Schafts (15) an den Aufnahmeabschnitt (9) auf die innere Hülse (21) überträgt.

2. Werkzeughalter nach Anspruch 1,
**dadurch gekennzeichnet, dass** die innere Hülse (21) wenigstens eine axial sich erstreckende Ausgleichsfuge, vorzugsweise jedoch in Umfangsrichtung verteilt mehrere solcher Ausgleichsfugen (31, 43) aufweist.

3. Werkzeughalter nach Anspruch 2,
**dadurch gekennzeichnet, dass** zumindest eine Teilanzahl der Ausgleichsfugen (31, 43) als axial sich erstreckende Nuten (43) ausgebildet sind.

4. Werkzeughalter nach Anspruch 3,
**dadurch gekennzeichnet, dass** die Nuten (43) in der Außenfläche (27c) der inneren Hülse (21c) vorgesehen sind.

5. Werkzeughalter nach einem der Ansprüche 2 bis 4,
**dadurch gekennzeichnet, dass** wenigstens eine der Ausgleichsfugen (31, 43) als die innere Hülse (21; 21c) radial durchdringender Schlitz (31; 31c) ausgebildet ist.

6. Werkzeughalter nach einem der Ansprüche 2 bis 5,
**dadurch gekennzeichnet, dass** die axiale Länge der Ausgleichsfugen (31, 43) kleiner ist als die axiale Länge der inneren Hülse (21) und die Ausgleichsfugen (31, 43) in Umfangsrichtung abwechselnd vom einen und vom anderen der axialen Enden der inneren Hülse (21) ausgehen.

7. Werkzeughalter nach einem der Ansprüche 1 bis 6,
**dadurch gekennzeichnet, dass** der Konuswinkel der beiden Hülsen (19, 21) so gewählt ist, dass die beiden Hülsen (19, 21) in axialer Richtung selbsthemmend miteinander verbindbar sind.

8. Werkzeughalter nach einem der Ansprüche 1 bis 7,
**dadurch gekennzeichnet, dass** die innere Hülse (21a) ein Außengewinde (33a) hat, mit dem sie in ein Innengewinde (39) der äußeren Hülse (19a) schraubbar ist.

9. Werkzeughalter nach einem der Ansprüche 1 bis 7,
**dadurch gekennzeichnet, dass** die innere Hülse (21) ein Außengewinde (33) hat, auf das eine an der äußeren Hülse (19) abstützbare Mutter (35) geschraubt ist.

10. Werkzeughalter nach einem der Ansprüche 1 bis 9,
**dadurch gekennzeichnet, dass** die äußere Hülse (19) an einem ihrer axialen Enden einen radial nach außen abstehenden Anschlag (37) für die Begrenzung der Einstecktiefe relativ zum Aufnahmeabschnitt (9) aufweist.

11. Werkzeughalter nach einem der Ansprüche 1 bis 10,
**dadurch gekennzeichnet**, das die äußere Hülse (19d) wenigstens eine axial sich erstreckende Ausgleichsfuge (47), vorzugsweise jedoch in Umfangsrichtung verteilt mehrere solcher Ausgleichsfugen (47) aufweist.

12. Werkzeughalter nach Anspruch 11,
**dadurch gekennzeichnet, dass** zumindest eine Teilanzahl der Ausgleichsfugen (47) als axial sich erstreckende Nuten oder die äußere Hülse (19d) radial durchdringende Schlitze ausgebildet sind.

13. Werkzeughalter nach Anspruch 11 oder 12,
**dadurch gekennzeichnet, dass** die Ausgleichsfugen (47) mit axialem Abstand von zumindest einem axialen Ende der äußeren Hülse (19d), vorzugsweise in axialem Abstand von beiden axialen Enden der äußeren Hülse (19d) enden.

14. Werkzeughalter nach Anspruch 13,
**dadurch gekennzeichnet, dass** im Bereich zumindest eines der beiden axialen Enden der äußeren Hülse (19d) der Außendurchmesser der äußeren Hülse (19d) axial zwischen dem axialen Ende der Hülse und dem dazu axial benachbarten Ende der Ausgleichsfugen (47) kleiner ist als im Bereich der Ausgleichsfugen (47).

15. Werkzeughalter nach einem der Ansprüche 1 bis 14,
**dadurch gekennzeichnet, dass** der Aufnahmeabschnitt (9) des Werkzeughalters (1) zum Direkteinspannen von Rotationswerkzeugen mit einem einzigen Schaft-Nenndurchmesser bemessen ist.

16. Werkzeughalter nach einem der Ansprüche 1 bis 15,
**dadurch gekennzeichnet, dass** der Aufnahmeabschnitt (9) des Werkzeughalters (1) die Form einer die Aufnahmeöffnung (13) enthaltenden Hülse hat, die für das Einsetzen oder Entnehmen der Durchmesserausgleichsbuchse (17) durch Erwärmen aufweitbar ist und dass bei nicht eingesetzter Durchmesserausgleichsbuchse (17) der Außendurchmesser der äußeren Hülse (19) der Durchmesserausgleichsbuchse (17) größer ist als der Innendurchmesser der Aufnahmeöffnung (13) des Aufnahmeabschitts (9) im abgekühlten Zustand und nach dem Abkühlen Presssitzkräfte auf die äußere Hülse (19) ausübt.

## Claims

1. Tool holder for a rotary tool, comprising:
- a mounting section (9) for holding a shaft (15) of the rotary tool centrally relative to an axis of rotation (7) of the tool holder (1),
- a diameter compensation bush (17) held detachably in a mounting opening (13) of the mounting section (9) for bridging a diameter difference between an internal diameter of the mounting opening (13) and a diameter determined according to the external diameter of the shaft (15), wherein the diameter compensation bush (17) comprises two sleeves (19, 21) arranged coaxially inside one another, of which the external sleeve (19) has a cylindrical external surface (23) and a conical inner surface (25) and of which the inner sleeve (21) has a conical external surface (27) bearing against the conical inner surface (25) of the external sleeve (19) and a cylindrical inner surface (29), the internal diameter of which can be changed for diameter compensation by axial displacement of the inner sleeve (21) and the external sleeve (19) relative to one another up to the diameter allowing the bearing of the inner surface (29) of the inner sleeve (21) against the external surface of the shaft (15) and
- clamping means provided on the mounting section (9), which define the mounting opening (13) and are radially adjustable between a radially widened detached position for inserting or removing the diameter compensation bush (17) and a clamping position, in which the clamping means exert radial press-fit forces on the diameter compensation bush (17),
wherein the external diameter of the external sleeve (19) is smaller than the internal diameter of the mounting opening (13) in the release position of the tightening means and the diameter compensation bush (17) in the release position of the clamping means can be inserted into the mounting opening (13) or removed therefrom,
**characterised in that** the diameter compensation bush (17) transmits to the inner sleeve (21) the radial press-fit forces, which are exerted in the clamped position on the external sleeve (19), for the press-fit holding of the shaft (15) on the mounting section (9).

2. Tool holder according to claim 1,
**characterised in that** the inner sleeve (21) comprises at least one axially extending compensation joint, preferably several such compensation joints (31, 43) distributed in circumferential direction.

3. Tool holder according to claim 2,
**characterised in that** at least a portion of the compensation joints (31, 43) are designed as axially extending grooves (43).

4. Tool holder according to claim 3,
**characterised in that** the grooves (43) are provided in the external surface (27c) of the inner sleeve (21c).

5. Tool holder according to one of claims 2 to 4,
**characterised in that** at least one of the compensation joints (31, 43) is designed as a slot (31; 31c) which radially penetrates the inner sleeve (21; 21c).

6. Tool holder according to one of claims 2 to 5,
**characterised in that** the axial length of the compensation joints (31, 43) is smaller than the axial length of the inner sleeve (21) and the compensation joints (31, 43) are directed in circumferential direction alternately from one end and the other of the axial ends of the inner sleeve (21).

7. Tool holder according to one of claims 1 to 6,
**characterised in that** the conical angle of the two sleeves (19, 21) is selected so that the two sleeves (19, 21) can be connected together in a self-locking manner in axial direction.

8. Tool holder according to one of claims 1 to 7,
**characterised in that** the inner sleeve (21 a) has an external thread (33a), with which it can be screwed into an internal thread (39) of the external sleeve (19a).

9. Tool holder according to one of claims 1 to 7,
**characterised in that** the inner sleeve (21) has an external thread (33), onto which a nut (35) supported on the external sleeve (19) is screwed.

10. Tool holder according to one of claims 1 to 9,
**characterised in that** the external sleeve (19) on one of its axial ends comprises a radially outwards projecting stop (37) for the delimitation of the insertion depth relative to the mounting section (9).

11. Tool holder according to one of claims 1 to 10,
**characterised in that** the external sleeve (19d) comprises at least one axially extending compensation joint (47), preferably several such compensation joints (47) distributed in circumferential direction.

12. Tool holder according to claim 11,
**characterised in that** at least a portion of the compensation joints (47) are designed as axially extending grooves or slots radially penetrating the external sleeve (19d).

13. Tool holder according to claim 11 or 12,
**characterised in that** the compensation joints (47) end at an axial distance from at least one axial end of the external sleeve (19d), preferably at an axial distance from both axial ends of the external sleeve (19d).

14. Tool holder according to claim 13,
**characterised in that** in the region of at least one of the two axial ends of the external sleeve (19d) the external diameter of the external sleeve (19d) is smaller axially between the axial end of the sleeve and the axially adjacent end of the compensation joints (47) than in the region of the compensation joints (47).

15. Tool holder according to one of claims 1 to 14,
**characterised in that** the mounting section (9) of the tool holder (1) is dimensioned for the direct clamping of rotary tools with a single shaft nominal diameter.

16. Tool holder according to one of claims 1 to 15, **characterised in that** the mounting section (9) of the tool holder (1) has the form of a sleeve containing the mounting opening (13), which sleeve can be widened by heating for the insertion or removal of the diameter compensation bush (17), and **in that** when not using the diameter compensation bush (17) the external diameter of the external sleeve (19) of the diameter compensation bush (17) is greater than the internal diameter of the mounting opening (13) of the mounting section (9) in a cooled state and after cooling exerts press fit forces on the external sleeve (19).

## Revendications

1. Porte-outil pour un outil rotatif, comportant :
- une section de réception (9) pour maintenir une tige (15) de l'outil rotatif de manière centrale par rapport à un axe de rotation (7) du porte-outil (1),
- une douille de compensation de diamètre (17) maintenue de manière lâche dans une ouverture de réception (13) de la section de réception (9) pour surmonter une différence de diamètre entre un diamètre intérieur de l'ouverture de réception (13) et un diamètre pouvant être prédéfini correspondant au diamètre extérieur de la tige (15), la douille de compensation de diamètre (17) comportant deux manchons (19, 21) disposés de manière coaxiale l'un à l'intérieur de l'autre, parmi lesquels le manchon extérieur (19) présente une surface extérieure cylindrique (23) et une surface intérieure conique (25) et parmi lesquels le manchon intérieur (21) présente une surface extérieure conique (27) reposant contre la surface intérieure conique (25) du manchon extérieur (19) et une surface intérieure cylindrique (29) dont le diamètre intérieur pour la compensation de diamètre peut être modifié par le déplacement axial du manchon intérieur (21) et du manchon extérieur (19) l'un par rapport à l'autre jusqu'au diamètre pouvant être prédéfini, permettant de poser la surface intérieure (29) du manchon intérieur (21) contre la surface extérieure de la tige (15) et
- des moyens de serrage prévus sur la section de réception (9), qui définissent l'ouverture de réception (13) et peuvent être réglés radialement entre une position desserrée élargie radialement destinée à insérer ou retirer la douille de compensation de diamètre (17) et une position serrée dans laquelle les moyens de serrage exercent des forces d'ajustage serré sur la douille de compensation de diamètre (17), le diamètre extérieur du manchon extérieur (19) étant inférieur au diamètre intérieur de l'ouverture de réception (13) dans la position desserrée des moyens de serrage et la douille de compensation de diamètre (17) dans la position desserrée des moyens de serrage pouvant être insérée dans l'ouverture de réception (13) ou en être extraite,
**caractérisé en ce que** la douille de compensation de diamètre (17) transmet au manchon intérieur (21) les forces d'ajustage serré radiales exercées dans la position serrée sur le manchon extérieur (19) pour le maintien de l'ajustage serré de la tige (15) sur la section de réception (9).

2. Porte-outil selon la revendication 1,
**caractérisé en ce que** le manchon, intérieur (21) comprend au moins un joint de compensation s'étendant axialement, mais de préférence plusieurs joints de compensation (31, 43) de ce type répartis dans la direction circonférentielle.

3. Porte-outil selon la revendication 2,
**caractérisé en ce qu'**au moins un nombre partiel des joints de compensation (31, 43) est conçu comme des rainures (43) s'étendant axialement.

4. Porte-outil selon la revendication 3,
**caractérisé en ce que** les rainures (43) sont prévues dans la surface extérieure (27c) du manchon intérieur (21c).

5. Porte-outil selon l'une quelconque des revendications 2 à 4,
**caractérisé en ce qu'**au moins un des joints de compensation (31, 43) est conçu comme une fente (31 ; 31c) traversant radialement le manchon intérieur (21 ; 21c).

6. Porte-outil selon l'une quelconque des revendications 2 à 5,
**caractérisé en ce que** la longueur axiale des joints de compensation (31, 43) est inférieure à la longueur axiale du manchon intérieur (21) et les joints de compensation (31, 43) partent dans la direction circonférentielle en alternance de l'une et de l'autre des extrémités axiales du manchon intérieur (21).

7. Porte-outil selon l'une quelconque des revendications 1 à 6,
**caractérisé en ce que** l'angle de cône des deux manchons (19, 21) est choisi de sorte que les deux manchons (19, 21) peuvent être reliés l'un à l'autre par blocage réciproque dans la direction axiale.

8. Porte-outil selon l'une quelconque des revendications 1 à 7,
**caractérisé en ce que** le manchon intérieur (21a) présente un filet extérieur (33a) avec lequel il peut être vissé dans un filet intérieur (39) du manchon extérieur (19a).

9. Porte-outil selon l'une quelconque des revendications 1 à 7,
**caractérisé en ce que** le manchon intérieur (21) présente un filet extérieur (33) sur lequel est vissé un écrou (35) pouvant s'appuyer contre le manchon extérieur (19).

10. Porte-outil selon l'une quelconque des revendications 1 à 9,
**caractérisé en ce que** le manchon extérieur (19) comprend sur une de ses extrémités axiales une butée (37) radialement en saillie vers l'extérieur pour limiter la profondeur d'introduction par rapport à la section de réception (9).

11. Porte-outil selon l'une quelconque des revendications 1 à 10,
**caractérisé en ce que** le manchon extérieur (19d) comprend au moins un joint de compensation (47) s'étendant axialement, mais de préférence plusieurs joints de compensation (47) de ce type répartis dans la direction périphérique.

12. Porte-outil selon la revendication 11,
**caractérisé en ce qu'**au moins un nombre partiel de joints de compensation (47) est conçu comme des rainures s'étendant axialement ou comme des fentes traversant radialement le manchon extérieur (19d).

13. Porte-outil selon la revendication 11 ou 12,
**caractérisé en ce que** les joints de compensation (47) terminent avec un écart axial depuis au moins une extrémité axiale du manchon extérieur (19d), de préférence dans un écart axial depuis les deux extrémités axiales du manchon extérieur (19d).

14. Porte-outil selon la revendication 13,
**caractérisé en ce que** dans la zone d'au moins une des deux extrémités axiales du manchon extérieur (19d), le diamètre extérieur du manchon extérieur (19d) dans le sens axial entre l'extrémité axiale du manchon et l'extrémité axialement adjacente à celle-ci des joints de compensation (47) est inférieur à celui dans la zone des joints de compensation (47).

15. Porte-outil selon l'une quelconque des revendications 1 à 14,
**caractérisé en ce que** la section de réception (9) du porte-outil (1) est dimensionnée pour encastrer directement les outils rotatifs avec un seul diamètre nominal de tige.

16. Porte-outil selon l'une quelconque des revendications 1 à 15,
**caractérisé en ce que** la section de réception (9) du porte-outil (1) présente la forme d'un manchon contenant l'ouverture de réception (13), lequel manchon peut être élargi pour l'insertion ou le retrait de la douille de compensation de diamètre (17) par réchauffement et **en ce que** lorsque la douille de compensation de diamètre (17) n'est pas insérée, le diamètre extérieur du manchon extérieur (19) de la douille de compensation de diamètre (17) est supérieur au diamètre intérieur de l'ouverture de réception (13) de la section de réception (9) à l'état refroidi et exerce après le refroidissement des forces d'ajustage serré sur le manchon extérieur (19).
